# EUROPÄISCHE PATENTSCHRIFT

(11) **EP 3 267 144 B1**
(45) Veröffentlichungstag und Bekanntmachung des Hinweises auf die Patenterteilung: **25.09.2019**
(21) Anmeldenummer: 17173713.3
(22) Anmeldetag: 31.05.2017
(51) Int. Cl.: G01B 7/00, D06F 39/02, D06F 58/20

(54) **POSITIONSERKENNUNGSVORRICHTUNG ZUM ERKENNEN EINER POSITION EINER SCHUBLADE IN EINEM EINSCHUBFACH EINES WÄSCHEPFLEGEGERÄTS**
POSITION DETECTING DEVICE FOR DETECTING A POSITION OF A DRAWER IN A DRAWER COMPARTMENT OF A LAUNDRY CARE DEVICE
DISPOSITIF DE DÉTECTION DE POSITION DESTINÉ À DÉTECTER UNE POSITION D'UN TIROIR DANS UN COMPARTIMENT DE TIROIR D'UNE MACHINE À LAVER

(30) Priorität: 07.07.2016 DE 102016112507
(43) Veröffentlichungstag der Anmeldung: 10.01.2018
(73) Patentinhaber: Miele & Cie. KG, 33332 Gütersloh (DE)
(72) Erfinder: Maas, Günther, 33332 Gütersloh (DE)

(56) Entgegenhaltungen:
- EP-A1- 1 900 868
- CN-A- 104 294 531
- CN-A- 104 404 740
- DE-A1-102008 019 554
- JP-A- 2008 194 342

## Beschreibung

Positionserkennungsvorrichtung zum Erkennen einer Position einer Schublade in einem Einschubfach eines Wäschepflegegeräts
Die Erfindung betrifft eine Positionserkennungsvorrichtung zum Erkennen einer Position einer Schublade in einem Einschubfach eines Wäschepflegegeräts, ein Verfahren zum Erkennen einer Position einer Schublade in einem Einschubfach eines Wäschepflegegeräts, ein Verfahren zum Steuern eines Wäschepflegegeräts und ein Steuergerät.

Eine Position eines verschiebbaren Objekts kann beispielsweise mithilfe eines Endschalters, eines optischen Sensors, eines Magnetfeldsensors oder eines Näherungssensors erfasst werden.

In der DE 10 2008 019554 A1, JP 2008 194342 A, CN 104 294 531 A, EP 1 900 868 A1 und CN 104 404 740 A wird magnetische Sensorik offenbart.

Der Erfindung stellt sich die Aufgabe, eine verbesserte Positionserkennungsvorrichtung zum Erkennen einer Position einer Schublade in einem Einschubfach eines Wäschepflegegeräts, ein verbessertes Verfahren zum Erkennen einer Position einer Schublade in einem Einschubfach eines Wäschepflegegeräts, ein verbessertes Verfahren zum Steuern eines Wäschepflegegeräts und ein verbessertes Steuergerät zu schaffen.

Erfindungsgemäß wird diese Aufgabe durch eine Positionserkennungsvorrichtung gemäß Anspruch 1, ein Verfahren gemäß Anspruch 12 zum Erkennen einer Position einer Schublade, ein Verfahren gemäß Anspruch 13 zum Steuern eines Wäschepflegegeräts und ein Steuergerät gemäß Anspruch 14 gelöst. Vorteilhafte Ausgestaltungen und Weiterbildungen der Erfindung ergeben sich aus den abhängigen Ansprüchen.

Die Erfindung bietet den Vorteil, dass unter Verwendung eines Magneten und eines Magnetfeldsensors eine Position einer Schublade in einem Wäschepflegegerät, etwa in einem Wassereinspülkasten einer Waschmaschine, erkannt werden kann. Beispielsweise kann hierdurch eine Endposition, d. h. eine Position der Schublade im eingeschobenen Zustand, erkannt werden. Der Vorteil einer solchen Positionserkennung besteht darin, dass beispielsweise auf einen Endschalter, dessen Montage aufgrund einer erforderlichen Abdichtung gegen Wasser aufwendig und teuer sein kann, verzichtet werden kann. Ferner können durch die Verwendung eines Magnetfeldsensors Ausfälle durch eventuelle Verschmutzung, wie sie etwa bei optischen Sensoren auftreten können, vermieden werden. Dank des Magnetfeldsensors kann insbesondere bei geringem Abstand zwischen Magnet Magnetfeldsensor eine hohe Genauigkeit bei der Positionserfassung erreicht werden.

Durch die Positionserkennung kann beispielsweise eine nicht vollständig geschlossene Schublade im Wassereinspülkasten erkannt werden. Dadurch kann beispielsweise verhindert werden, dass es zum unkontrollierten Auslauf von Wasser kommt, wenn Wasserdüsen und Löcher in einer Weichspülerklappe im nicht vollständig geschlossenen Zustand der Schublade nicht korrekt übereinanderliegen. Ferner kann verhindert werden, dass in die Schublade eingefüllte Wäschebehandlungsmittel nicht oder nicht vollständig ausgespült werden. Bei Einsatz einer optischen Kapselerkennung kann zudem vermieden werden, dass eine Kapselfarbe bei nicht vollständig geschlossener Schublade nicht oder nicht ausreichend sicher detektiert wird. Auch kann mithilfe der erkannten Schubladenposition unterschieden werden, ob beispielsweise statt der Kapselfarbe die Farbe eines Reinigungspulvers gemessen wird.

Es wird eine Positionserkennungsvorrichtung zum Erkennen einer Position einer Schublade in einem Einschubfach eines Wäschepflegegeräts vorgestellt, wobei die Positionserkennungsvorrichtung folgende Merkmale aufweist:
einen an und/oder in der Schublade angeordneten oder anordenbaren Magneten zum Erzeugen eines Magnetfeldes; und
einen Magnetfeldsensor zum Erfassen einer Änderung des Magnetfeldes beim Bewegen der Schublade in einer Einschubrichtung zwischen einer ersten Position und einer zweiten Position in dem Einschubfach.

Bei dem Einschubfach kann es sich beispielsweise um einen Wassereinspülkasten handeln. Unter einem Wäschepflegegerät kann beispielsweise eine Waschmaschine, ein Wäschetrockner oder eine Kombination aus Waschmaschine und Wäschetrockner verstanden werden. Unter einem Magneten kann je nach Ausführungsform ein Dauermagnet oder ein Elektromagnet verstanden werden. Beispielsweise kann der Magnet als Stabmagnet ausgeführt sein. Der Magnet kann etwa an und/oder in einem Deckelelement zum Abdecken der Schublade angeordnet oder anordenbar sein. Bei dem Magnetfeldsensor kann es sich insbesondere um einen in Halbleitertechnik gefertigten Sensor wie etwa einen Hall- oder XMR-Sensor handeln. Beispielsweise kann die erste Position einem Zustand der Schublade entsprechen, in dem die Schublade zumindest teilweise aus dem Einschubfach herausragt. Bei der zweiten Position kann es sich etwa um eine Endposition der Schublade im eingeschobenen Zustand handeln.

Erfindungsgemäß weist die Positionserkennungsvorrichtung ein Koppelelement zum magnetischen Koppeln des Magneten mit dem Magnetfeldsensor auf. Das Koppelelement ist an und/oder in dem Einschubfach angeordnet. Unter einem Koppelelement kann ein Element aus einem magnetisch leitfähigen Material verstanden werden. Beispielsweise kann das Koppelelement zumindest ein Blechteil umfassen. Der Magnet und das Koppelelement können durch einen geringen Luftspalt voneinander getrennt sein, um eine magnetische Kopplung zu ermöglichen. Je nach Ausführungsform kann das Koppelelement zumindest teilweise in das Einschubfach hineinragen. Durch diese Ausführungsform kann der magnetische Widerstand zwischen Magnet und Magnetfeldsensor in einer Schubladenposition reduziert werden.

Es ist vorteilhaft, wenn das Koppelelement und der Magnet in der ersten Position einander gegenüberliegen, um einen magnetischen Kreis aus dem Magneten, dem Koppelelement und dem Magnetfeldsensor zu bilden. In der zweiten Position können das Koppelelement und der Magnet zueinander versetzt sein, um den magnetischen Kreis zu unterbrechen. Dadurch wird mit geringem Montageaufwand eine einfache und zuverlässige Erkennung der Endposition der Schublade ermöglicht.

Gemäß einer weiteren Ausführungsform kann die Positionserkennungsvorrichtung ein weiteres Koppelelement zum magnetischen Koppeln des Magneten mit dem Magnetfeldsensor aufweisen. Hierbei kann das weitere Koppelelement an und/oder in der Schublade angeordnet oder anordenbar sein. Insbesondere kann der Magnet an dem weiteren Koppelelement angeordnet oder anordenbar sein. Ebenso wie bei dem Koppelelement kann es sich bei dem weiteren Koppelelement um ein Element aus einem magnetisch leitfähigen Material, insbesondere beispielsweise um ein Blechteil, handeln. Durch diese Ausführungsform kann der magnetische Widerstand zwischen Magnet und Magnetfeldsensor in zwei Schubladenpositionen reduziert werden. Dadurch wird eine einfache und zuverlässige Erkennung von zwei Schubladenpositionen ermöglicht, der Endposition und einer Zwischenposition.

Hierbei kann das weitere Koppelelement u-förmig mit einem ersten Schenkel und einem zweiten Schenkel ausgestaltet sein. Der Magnet kann zwischen dem ersten Schenkel und dem zweiten Schenkel angeordnet oder anordenbar sein. Unter einem Schenkel kann beispielsweise ein umgebogener Endabschnitt des weiteren Koppelelements verstanden werden. Hierbei können der erste und der zweite Schenkel in die gleiche Richtung umgebogen sein. Beispielsweise kann zumindest einer der beiden Schenkel dem Magnetfeldsensor oder dem Koppelelement zugewandt sein. Durch diese Ausführungsform kann das durch den Magneten erzeugte Magnetfeld effizient zum Koppelelement oder zum Magnetfeldsensor geführt werden. Ferner wird dadurch die Erkennung zumindest einer Zwischenposition der Schublade, etwa einer Position zwischen der ersten und zweiten Position, ermöglicht.

Gemäß einer weiteren Ausführungsform kann das Koppelelement ein erstes Leitblech und ein zweites Leitblech umfassen. Hierbei kann der Magnetfeldsensor zwischen dem ersten Leitblech und dem zweiten Leitblech angeordnet oder anordenbar sein. Unter einem Leitblech kann ein magnetisch leitfähiges Blechelement verstanden werden. Die Leitbleche können beispielsweise als längliche Platten ausgeformt sein und je nach Ausführungsform unterschiedlich breite Abschnitte aufweisen. Ferner können sich die Leitbleche zumindest abschnittsweise entlang der Einschubrichtung erstrecken, wobei der Magnet entlang der Leitbleche durch Bewegen der Schublade verschiebbar sein kann. Durch diese Ausführungsform wird eine mehrteilige Ausführung des Koppelelements ermöglicht.

Es ist ferner vorteilhaft, wenn in der ersten Position der erste Schenkel dem ersten Leitblech und der Magnet dem zweiten Leitblech gegenüberliegt. Zusätzlich oder alternativ kann in der zweiten Position der Magnet dem ersten Leitblech und der zweite Schenkel dem zweiten Leitblech gegenüberliegen. Somit kann durch Bewegen der Schublade zwischen der ersten und der zweiten Position ein Magnetfluss zwischen dem Magneten und dem Magnetfeldsensor umgekehrt werden.

Gemäß einer weiteren Ausführungsform kann das erste Leitblech und, zusätzlich oder alternativ, das zweite Leitblech an zumindest einer Biegestelle umgebogen sein. Beispielsweise kann eine Biegung an der Biegestelle im Wesentlichen rechtwinklig ausgeführt sein. Das erste oder zweite Leitblech kann somit winkelförmig ausgestaltet sein. Durch diese Ausführungsform kann das erste oder zweite Leitblech mit einfachen Mitteln an einen vorhandenen Bauraum angepasst werden.

Des Weiteren kann das erste Leitblech ein erstes U-Profil und, zusätzlich oder alternativ, das zweite Leitblech ein zweites U-Profil aufweisen. Hierbei kann das erste U-Profil durch einen Endabschnitt des ersten Leitblechs bzw. das zweite U-Profil durch einen Endabschnitt des zweiten Leitblechs gebildet sein. Beispielsweise kann der Endabschnitt des ersten oder zweiten Leitblechs in eine von dem Magnetfeldsensor abgewandte Richtung umgebogen sein, um das erste oder zweite U-Profil zu bilden. Damit kann sichergestellt werden, dass die Leitbleche nicht verdreht eingebaut werden.

Es ist von Vorteil, wenn sich das erste U-Profil und, zusätzlich oder alternativ, das zweite U-Profil in einer von der Einschubrichtung abweichenden Richtung, insbesondere im Wesentlichen senkrecht zur Einschubrichtung, erstreckt. Hierbei kann der Magnet zwischen dem ersten U-Profil und dem zweiten U-Profil durch Bewegen der Schublade verschiebbar sein. Durch diese Ausführungsform kann ein Abstand zwischen dem Koppelelement und dem Magneten verringert werden.

Es ist ferner vorteilhaft, wenn der Magnet als Dauermagnet, insbesondere als Stabmagnet, ausgeführt ist. Zusätzlich oder alternativ kann eine einen Nordpol und einen Südpol des Magneten miteinander verbindende Längsachse des Magneten im Wesentlichen parallel oder senkrecht zur Einschubrichtung ausgerichtet sein. Durch diese Ausführungsform kann eine zuverlässige Funktion der Positionserkennungsvorrichtung sichergestellt werden. Ferner können durch die Verwendung von Standard-Bauformen die Herstellungskosten niedrig gehalten werden.

Gemäß einer weiteren Ausführungsform kann die Positionserkennungsvorrichtung mit einer Erkennungseinrichtung zum Erkennen der Position der Schublade in Abhängigkeit von der durch den Magnetfeldsensor erfassten Umkehrung des Magnetfelds realisiert sein. Unter einer Erkennungseinrichtung kann eine Recheneinheit zum Verarbeiten von Signalen oder Daten verstanden werden. Dadurch kann die Position der Schublade erkannt werden.

Der hier vorgestellte Ansatz schafft ferner ein Verfahren zum Erkennen einer Position einer Schublade in einem Einschubfach eines Wäschepflegegeräts unter Verwendung einer Positionserkennungsvorrichtung gemäß einer der vorstehenden Ausführungsformen, wobei das Verfahren folgende Schritte umfasst:
Einlesen eines Sensorsignals, das die von dem Magnetfeldsensor erfasste Änderung des Magnetfelds repräsentiert; und
Erzeugen eines die Position repräsentierenden Positionssignals unter Verwendung des Sensorsignals.

Das Verfahren kann beispielsweise von einer Erkennungseinrichtung gemäß einer vorstehenden Ausführungsform durchgeführt werden.

Des Weiteren schafft der hier beschriebene Ansatz ein Verfahren zum Steuern eines Wäschepflegegeräts mit einer Positionserkennungsvorrichtung gemäß einer der vorstehenden Ausführungsformen, wobei das Verfahren folgende Schritte umfasst:
Einlesen eines die Position der Schublade repräsentierenden Positionssignals; und
Erzeugen eines Steuersignals zum Steuern des Wäschepflegegeräts unter Verwendung des Positionssignals.

Die Verfahren können beispielsweise in Software oder Hardware oder in einer Mischform aus Software und Hardware, beispielsweise in einem Steuergerät, implementiert sein.

Schließlich schafft der hier beschriebene Ansatz ein Steuergerät mit Einheiten, die ausgebildet sind, um das Verfahren gemäß einer vorstehenden Ausführungsform auszuführen und/oder anzusteuern.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Ein Ausführungsbeispiel der Erfindung ist in den Zeichnungen rein schematisch dargestellt und wird nachfolgend näher beschrieben. Es zeigt
- Figur 1: eine schematische Darstellung eines Abschnitts eines Wäschepflegegeräts mit einer Positionserkennungsvorrichtung gemäß einem Ausführungsbeispiel;
- Figur 2: eine schematische Darstellung einer Positionserkennungsvorrichtung gemäß einem Ausführungsbeispiel;
- Figur 3: eine schematische Darstellung von Komponenten einer Positionserkennungsvorrichtung gemäß einem Ausführungsbeispiel;
- Figur 4: eine schematische Darstellung von Komponenten einer Positionserkennungsvorrichtung gemäß einem Ausführungsbeispiel;
- Figur 5: ein Ablaufdiagramm eines Ausführungsbeispiels eines Verfahrens zum Erkennen einer Position einer Schublade;
- Figur 6: ein Ablaufdiagramm eines Ausführungsbeispiels eines Verfahrens zum Steuern eines Wäschepflegegeräts;
- Figur 7: eine schematische Darstellung eines Leitblechs gemäß einem Ausführungsbeispiel;
- Figur 8: eine schematische Darstellung eines Leitblechs aus Figur 7;
- Figur 9: eine schematische Darstellung eines Leitblechs aus Figur 7; und
- Figur 10: eine schematische Darstellung eines Koppelelements mit einem Leitblech aus Figur 7.

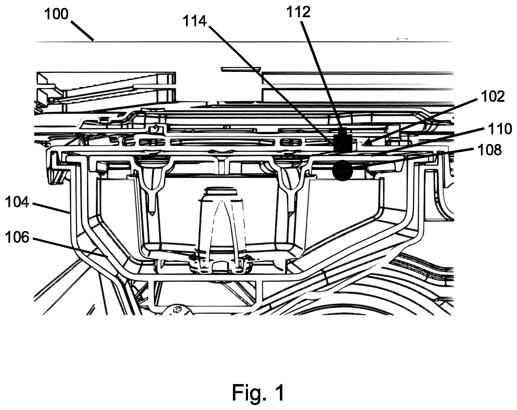

Figur 1 zeigt eine schematische Darstellung eines Abschnitts eines Wäschepflegegeräts 100 mit einer Positionserkennungsvorrichtung 102 gemäß einem Ausführungsbeispiel. Das Wäschepflegegerät 100, hier eine Waschmaschine, weist ein Einschubfach 104 auf, in das eine Schublade 106 eingeschoben ist. Gezeigt ist ein Querschnitt durch das Einschubfach 104 und die Schublade 106. Bei dem Einschubfach 104 handelt es sich beispielsweise um einen Wassereinspülkasten. Die Schublade 106 dient zum Aufnehmen von Wäschepflegemittel wie etwa Waschpulver oder Weichspüler. Die Positionserkennungsvorrichtung 102 umfasst einen Magneten 108, der in der Schublade 106 angeordnet ist. Gemäß Figur 1 ist der Magnet 108 an einem Deckelelement 110 der Schublade 106 angebracht. Bei dem Deckelelement 110 handelt es sich beispielsweise um eine Klappe zum Abdecken eines Weichspülerfachs der Schublade 106. Der Magnet 108 wird somit beim Bewegen der Schublade 106 mitbewegt. Des Weiteren umfasst die Positionserkennungsvorrichtung 102 einen Magnetfeldsensor 112, der hier in einen dem Magneten 108 gegenüberliegenden Bereich des Einschubfachs 104 integriert ist. Gemäß dem in Figur 1 gezeigten Ausführungsbeispiel ist der Magnetfeldsensor 112 auf einer benachbart zum Einschubfach 104 angeordneten Leiterkarte verbaut.

Der Magnet 108 erzeugt ein Magnetfeld, das durch den Magnetfeldsensor 112 erfasst wird und sich je nach Position des Magneten 108 relativ zum Magnetfeldsensor 112 ändert. Anhand der Änderung des Magnetfeldes kann die Position der Schublade 106 im Einschubfach 104 erkannt werden.

Erfindungsgemäß ist die Positionserkennungsvorrichtung 102 mit einem Koppelelement 114 realisiert, das ausgebildet ist, um den Magneten 108 magnetisch mit dem Magnetfeldsensor 112 zu koppeln. Durch das Koppelelement 114 wird ein Abstand zwischen dem Magnetfeldsensor 112 und dem Magneten 108 reduziert. Das Koppelelement 114 ist je nach Ausführungsbeispiel mit einem oder mehreren Magnetfeldleitblechen realisiert.

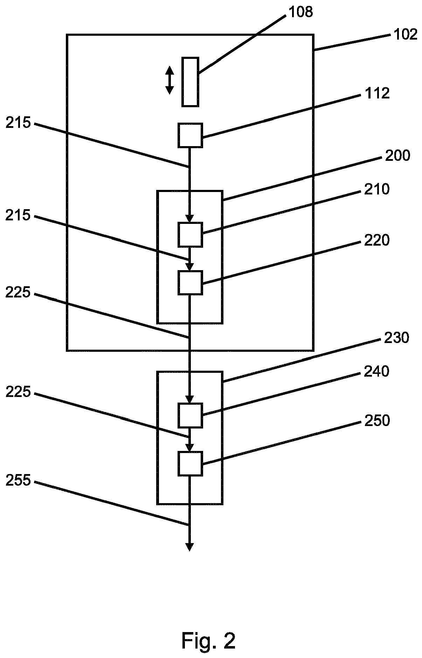

Figur 2 zeigt eine schematische Darstellung einer Positionserkennungsvorrichtung 102 gemäß einem Ausführungsbeispiel. Bei der Positionserkennungsvorrichtung 102 kann es sich um eine Positionserkennungsvorrichtung, wie sie vorangehend anhand von Figur 1 beschrieben ist, handeln. Die Positionserkennungsvorrichtung 102 umfasst eine Erkennungseinrichtung 200 mit einer Einleseeinheit 210, die ausgebildet ist, um ein von dem Magnetfeldsensor 112 erzeugtes Sensorsignal 215, das die beim Bewegen des

Magneten 108 hervorgerufene Änderung des Magnetfelds repräsentiert, einzulesen und an eine Erzeugungseinheit 220 der Erkennungseinrichtung 200 weiterzuleiten. Die Erzeugungseinheit 220 ist ausgebildet, um das Sensorsignal 215 auszuwerten und mithilfe des Sensorsignals 215 die Position der Schublade zu erkennen. Als Ergebnis des Auswertens erzeugt die Erzeugungseinheit 220 ein die erkannte Position repräsentierendes Positionssignal 225.

Gemäß einem Ausführungsbeispiel sendet die Erzeugungseinheit 220 das Positionssignal 225 an ein Steuergerät 230 des Wäschepflegegeräts. Eine Einleseeinheit 240 des Steuergeräts 230 ist ausgebildet, um das Positionssignal 225 einzulesen und an eine Erzeugungseinheit 250 des Steuergeräts 230 weiterzuleiten. Die Erzeugungseinheit 250 verwendet das Positionssignal 225, um ein Steuersignal 255 zum Steuern des Wäschepflegegeräts in Abhängigkeit von der Position der Schublade zu erzeugen.

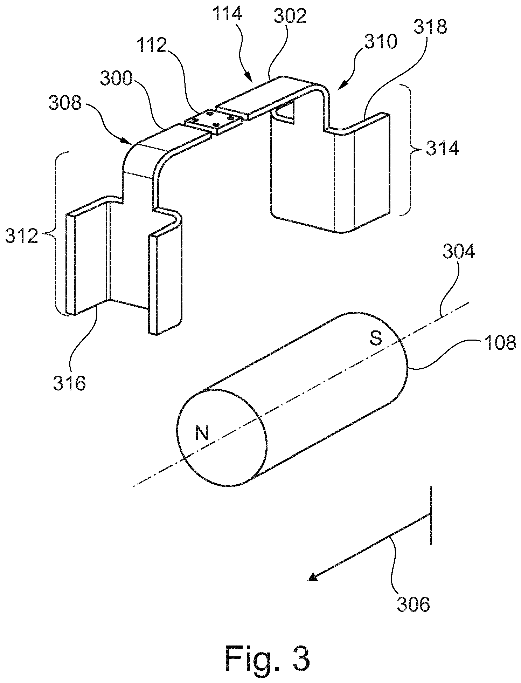

Figur 3 zeigt eine schematische Darstellung von Komponenten einer Positionserkennungsvorrichtung gemäß einem Ausführungsbeispiel. Gezeigt sind der Magnetfeldsensor 112, das Koppelelement 114 und der Magnet 108. Gemäß diesem Ausführungsbeispiel ist das Koppelelement 114 mit einem ersten Leitblech 300 und einem zweiten Leitblech 302 realisiert. Zwischen den beiden Leitblechen 300, 302 ist der Magnetfeldsensor 112 angeordnet, wobei der Magnetfeldsensor 112 je durch einen geringen Luftspalt von den beiden Leitblechen 300, 302 getrennt ist. Der Magnet 108 ist entlang der Leitbleche 300, 302 verschiebbar.

Gemäß diesem Ausführungsbeispiel ist eine Längsachse 304 des Magneten 108 im Wesentlichen parallel zu einer Einschubrichtung 306 der Schublade ausgerichtet. Der Magnet 108 ist als Stabmagnet realisiert, dessen erstes Ende als Nordpol N und dessen zweites Ende als Südpol S fungiert.

Wie in Figur 3 zu erkennen, ist das erste Leitblech 300 an einer ersten Biegestelle 308 und das zweite Leitblech 302 an einer zweiten Biegestelle 310 im rechten Winkel umgebogen, sodass ein umgebogener Endabschnitt 312 des ersten Leitblechs 300 und ein umgebogener Endabschnitt 314 des zweiten Leitblechs 302 einander gegenüberliegen und im Wesentlichen parallel zueinander ausgerichtet sind. Zugleich sind die Endabschnitte 312, 314 im Wesentlichen senkrecht zur Längsachse 304 und zur Einschubrichtung 306 ausgerichtet.

Die an den Biegestellen 308, 310 realisierte Biegung kann auch einen anderen Biegewinkel als 90 Grad aufweisen.

Gemäß dem in Figur 3 gezeigten Ausführungsbeispiel ist der Endabschnitt 312 des ersten Leitblechs 300 zumindest abschnittsweise als ein erstes U-Profil 316 und der Endabschnitt 314 des zweiten Leitblechs 302 zumindest abschnittsweise als ein zweites U-Profil 318 ausgeformt. Beispielsweise sind die beiden U-Profile 316, 318 durch Umbiegen einander gegenüberliegender Randabschnitte der Endabschnitte realisiert, wobei die Randabschnitte je in eine von dem Magnetfeldsensor 112 abgewandte Richtung umgebogen sind.

Das Wäschepflegegerät ist beispielsweise mit einer optischen Kapselerkennung realisiert. Um Kosten einzusparen, ist der Magnetfeldsensor 112 auf einer Leiterkarte für die optische Kapselerkennung mitbestückt. Ein relativ großer Abstand zwischen dem Magnet 108, der in einer Weichspülerklappe angeordnet sein kann, und dem Magnetfeldsensor 112 wird mithilfe der zwei winkelförmigen Magnetfeldleitbleche 300, 302 überbrückt. Dadurch, dass die Lücken in einem magnetischen Kreis, der den Magneten 108, die beiden Leitbleche 300, 302 und den Magnetfeldsensor 112 umfasst, klein sind, kann trotz eines größeren Abstands zwischen Magnet 108 und Magnetfeldsensor 112 eine genaue Positionserkennung der Schublade realisiert werden. Wird die Schublade aufgezogen, so wird der Magnet 108 aus dem magnetischen Kreis entfernt, was durch den Magnetfeldsensor 112 signalisiert wird. Auf diese Weise kann beispielsweise eine Endposition der Schublade erkannt werden.

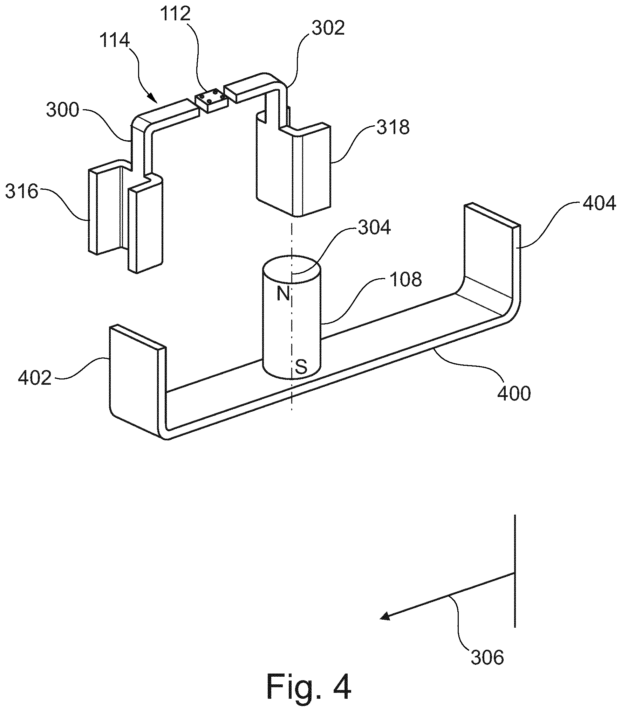

Figur 4 zeigt eine schematische Darstellung von Komponenten einer Projektionsvorrichtung gemäß einem Ausführungsbeispiel. Die in Figur 4 gezeigten Komponenten entsprechen im Wesentlichen den vorangehend anhand von Figur 3 beschriebenen Komponenten, mit dem Unterschied, dass der Magnet 108 gemäß Figur 4 auf einem optionalen weiteren Koppelelement 400 zum magnetischen Koppeln des Magneten 108 mit dem Magnetfeldsensor 112 angeordnet ist. Das weitere Koppelelement 400 ist in die Schublade integrierbar. Hierbei ist das den Südpol S repräsentierende Ende des Magneten 108 magnetisch leitfähig mit dem weiteren Koppelelement 400 verbunden. Die Längsachse 304 des Magneten 108 ist im Wesentlichen senkrecht zur Einschubrichtung 106 ausgerichtet. Das weitere Koppelelement 400 ist als ein länglicher Blechstreifen realisiert, dessen beide Enden jeweils in Richtung des Koppelelements 114 im rechten Winkel umgebogen sind. Das weitere Koppelelement 400 weist somit einen ersten Schenkel 402 und einen zweiten Schenkel 404 auf, die im Wesentlichen senkrecht zur Einschubrichtung 306 ausgerichtet sind. Der Magnet 108 ist hierbei zwischen den beiden Schenkeln 402, 404, insbesondere mittig zwischen den beiden Schenkeln 402, 404, angeordnet.

In der in Figur 4 gezeigten Position der Schublade befindet sich der erste Schenkel 402 gegenüber dem ersten U-Profil 316, während das den Nordpol N repräsentierende Ende des Magneten 108 dem zweiten U-Profil 314 gegenüberliegt. Diese Position entspricht beispielsweise einem geschlossenen Zustand der Schublade. Beim Öffnen der Schublade werden der Magnet 108 und das weitere Koppelelement 400 in eine weitere Position (Zwischenposition) verschoben, in der das den Nordpol N repräsentierende Ende des Magneten 108 dem ersten U-Profil 316 gegenüberliegt und der zweite Schenkel 404 dem zweiten U-Profil 318 gegenüberliegt. Auf diese Weise kann ein magnetischer Fluss durch den Magneten 108, die beiden Koppelelemente 114, 400 und dem Magnetfeldsensor 112 in Abhängigkeit von der Position der Schublade umgekehrt werden.

Die in Figur 4 gezeigte Lage der winkelförmigen Magnetfeldleitbleche 300, 302 und die Lage des Magnetfeldsensors 112 kann identisch mit der in Figur 3 gezeigten Lage dieser Komponenten sein, mit dem Unterschied, dass der Magnet 108 senkrecht statt waagerecht zur Einschubrichtung 306 orientiert ist. Das hinzukommende weitere Koppelelement 400 ist beispielsweise als u-förmiges Magnetfeldleitblech realisiert, dass unter einem Weichspülerfachdeckel der Schublade anordenbar ist.

Beispielsweise lassen sich mithilfe des Magneten 108, des Magnetfeldsensors 112 und insgesamt dreier Magnetfeldleitbleche in Form der beiden Koppelelemente 114, 400 zwei unterschiedliche Schubladenpositionen, etwa eine Endposition und eine Zwischenposition, erkennen. Dabei ist der Magnetfeldsensor 112 ausgebildet, um sowohl Magnetflüsse vom Nord- zum Südpol als auch vom Süd- zum Nordpol zu detektieren. Der Magnetfeldsensor 112 weist für jede der beiden Flussrichtungen einen separaten Ausgang auf. Gemäß diesem Ausführungsbeispiel sind der Magnetfeldsensor 112 und die zwei winkelförmigen Leitbleche 300, 302 als feststehende Teile des magnetischen Kreises realisiert. Der Magnet 108 und das weitere Koppelelement 400, hier ein u-förmiges Leitblech, sind als bewegliche Teile des magnetischen Kreises realisiert, d. h. in oder an der Schublade montiert. Hierbei ist der Magnet 108 mittig auf dem weiteren Koppelelement 400 montiert. Das weitere Koppelelement 400 ist so ausgelegt, dass ein Abstand zwischen den Schenkeln 402, 404 doppelt so groß wie ein Abstand zwischen den beiden dem Magneten 108 zugewandten Leitblechenden des Koppelelements 114 ist. So befindet sich der Magnet 108 in der Endposition oder in der Zwischenposition unter einem der beiden feststehenden Leitblechenden, während sich einer der beiden Schenkel 402, 404 unter einem anderen der beiden feststehenden Leitblechenden befindet. Auf diese Weise kann die Richtung des Magnetflusses im Magnetfeldsensor 112 ausgewertet werden. Über die zugehörigen Signalausgänge kann angezeigt werden, ob sich die Schublade in einer der beiden Positionen und, wenn ja, in welcher der beiden Positionen sich die Schublade befindet.

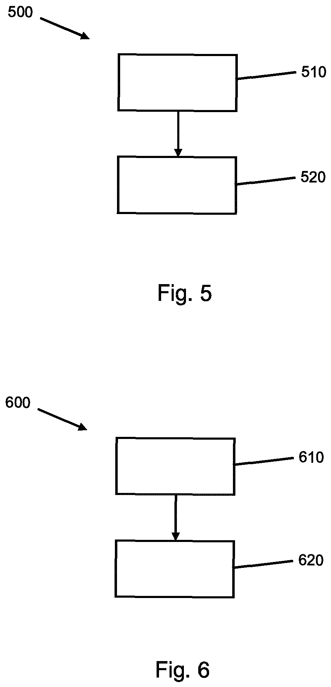

Figur 5 zeigt ein Ablaufdiagramm eines Verfahrens 500 zum Erkennen einer Position einer Schublade in einem Einschubfach eines Wäschepflegegeräts unter Verwendung einer Positionserkennungsvorrichtung gemäß einem Ausführungsbeispiel. Das Verfahren 500 kann beispielsweise im Zusammenhang mit einer vorangehend anhand von Figur 2 beschriebenen Erkennungseinrichtung durchgeführt werden. Hierbei wird in einem Schritt 510 das Sensorsignal, das die durch den Magnetfeldsensor erfasste Änderung des Magnetfelds repräsentiert, eingelesen. In einem weiteren Schritt 520 wird unter Verwendung des Sensorsignals das die Position der Schublade im Einschubfach repräsentierende Positionssignal erzeugt.

Mithilfe des Verfahrens 500 kann beispielsweise erkannt werden, ob sich ein Farbsensor über einem Referenzfeld, beispielsweise einem definierten Grau der Weichspülerklappe, befindet. Mithilfe des Referenzfelds kann festgestellt werden, ob eine Optik des Farbsensors verschmutzt ist. Je nach Verschmutzung kann beispielsweise ein entsprechender Reinigungshinweis ausgegeben werden.

Figur 6 zeigt ein Ablaufdiagramm eines Verfahrens 600 zum Steuern eines Wäschepflegegeräts mit einer Positionserkennungsvorrichtung gemäß einem Ausführungsbeispiel. Das Verfahren 600 kann beispielsweise im Zusammenhang mit einem vorangehend anhand von Figur 2 beschriebenen Steuergerät durchgeführt werden. Hierbei wird in einem Schritt 610 das Positionssignal eingelesen. In einem weiteren Schritt 620 wird unter Verwendung des Positionssignals das Steuersignal zum Steuern des Wäschepflegegeräts erzeugt.

Beispielsweise wird ein Waschprogramm nur dann gestartet, wenn der Magnetfeldsensor erkennt, dass die Schublade des Wassereinspülkastens komplett geschlossen ist, denn nur dann ist sichergestellt, dass es nicht zu einem unkontrollierten Auslauf von Wasser kommt, das dann beispielsweise außen an einer Gerätfront nach unten abläuft, und optimale Ausspülergebnisse für die in der Schublade eingefüllten Wäschebehandlungsmittel erreicht werden.

Ferner wird beispielsweise beim Einsatz einer optischen Kapselerkennung die Farbmessung nur dann aktiviert, wenn der Magnetfeldsensor erkennt, dass die Schublade des Wassereinspülkastens komplett geschlossen ist. Nur dann ist sichergestellt, dass die Farbe des Reinigungspulvers oder des leeren Faches nicht als Kapselfarbe interpretiert wird.

Hierbei kann die Einschaltdauer der Beleuchtung zur Farbmessung erheblich reduziert werden, wenn die Beleuchtung lediglich dann aktiviert wird, wenn die Schublade erstmalig eindeutig die Endposition erreicht hat. Auf diese Weise können Alterungseffekte wie etwa ein Rückgang der Lichtstärke oder die Änderung der Farbtemperatur reduziert werden. Dadurch kann die Langzeitstabilität der Farberkennung erheblich gesteigert werden.

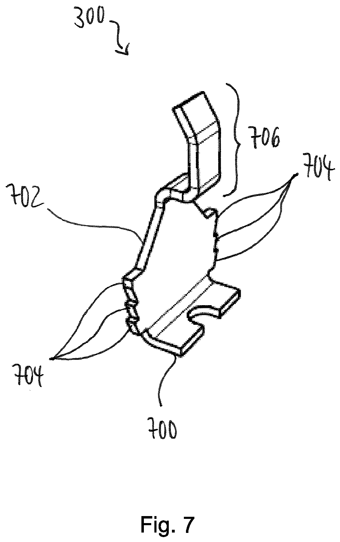

Figur 7 zeigt eine schematische Darstellung eines Leitblechs 300 gemäß einem Ausführungsbeispiel. Bei dem Leitblech, auch Polblech genannt, kann es sich um ein vorangehend anhand der Figuren 3 und 4 beschriebenes Leitblech handeln. Im Unterschied zu den Figuren 3 und 4 weist das Leitblech 300 einen relativ großflächigen, umgebogenen Fuß 700 auf, durch den viel magnetischer Fluss eingesammelt werden kann. Zwei einander gegenüberliegende Ränder einer an den Fuß 700 angrenzenden Seitenwand 702 des Leitblechs 300 sind je mit einer Mehrzahl sägezahnförmiger Erhebungen 704 zur sicheren Verankerung nach dem Eindrücken in einen entsprechenden Halter ausgeformt. Ein dem Fuß 700 gegenüberliegender Endabschnitt 706 der Seitenwand 702 ist in eine dem Magnetfeldsensor zugewandte Richtung umgebogen.

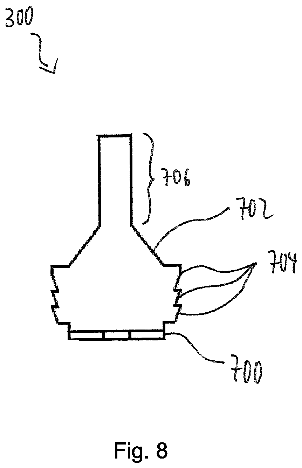

Figur 8 zeigt eine schematische Darstellung eines Leitblechs 300 aus Figur 7 in der Draufsicht.

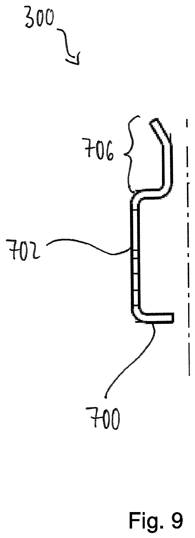

Figur 9 zeigt eine schematische Darstellung eines Leitblechs 300 aus Figur 7 in der Seitenansicht.

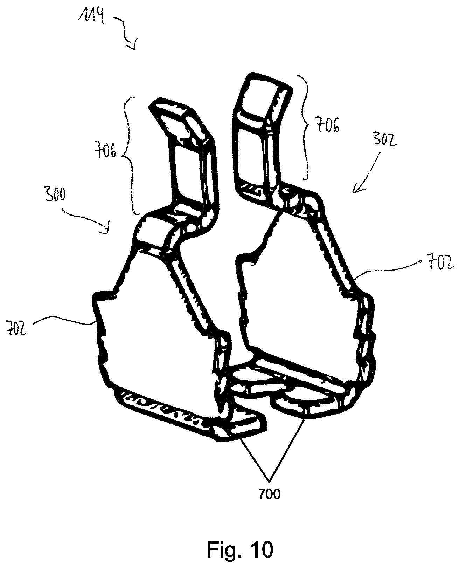

Figur 10 zeigt eine schematische Darstellung eines Koppelelements 114 mit einem Leitblech 300 aus Figur 7. Das Koppelelement 114 umfasst ferner das zweite Leitblech 302, das im Wesentlichen identisch zum ersten Leitblech 300 ausgeformt ist. Wie in Figur 10 zu erkennen, sind die beiden Leitbleche 300, 302 derart einander gegenüberliegend angeordnet, dass sich der Querschnitt des Koppelelements 114 zum Magnetfeldsensor hin zur Flusskonzentration verengt. Durch die im Bereich des Magnetfeldsensors parallel liegenden Flächen der Endabschnitte 706 kann ein relativ homogener Feldbereich geschaffen werden, der die Positionierung eines Sondenchips unkritisch werden lässt. Durch große, dem Magneten gegenüberstehende Flächen kann der magnetische Widerstand verringert werden, den der Fluss beim Übergang vom Magneten zu den Leitblechen 300, 302 vorfindet. Die Einschnürung zum Magnetfeldsensor hin konzentriert den Fluss auf den Sensorluftspalt, während der relativ große Abstand zwischen den Seitenwänden 702 den Streufluss zwischen den Leitblechen 300, 302 klein hält.

## Patentansprüche

1. Positionserkennungsvorrichtung (102) zum Erkennen einer Position einer Schublade (106) in einem Einschubfach (104) eines Wäschepflegegeräts (100), wobei die Positionserkennungsvorrichtung (102) folgende Merkmale aufweist:
einen an und/oder in der Schublade (106) angeordneten Magneten (108) zum Erzeugen eines Magnetfeldes; und
einen Magnetfeldsensor (112) zum Erfassen einer Änderung des Magnetfeldes beim Bewegen der Schublade (106) in einer Einschubrichtung (306) zwischen einer ersten Position und einer zweiten Position in dem Einschubfach (104),
**gekennzeichnet durch**
ein Koppelelement (114) zum magnetischen Koppeln des Magneten (108) mit dem Magnetfeldsensor (112), wobei das Koppelelement (114) an und/oder in dem Einschubfach (104) angeordnet ist.

2. Positionserkennungsvorrichtung (102) gemäß Anspruch 1, **dadurch gekennzeichnet, dass** das Koppelelement (114) und der Magnet (108) in der ersten Position einander gegenüberliegen, um einen magnetischen Kreis aus dem Magneten (108), dem Koppelelement (114) und dem Magnetfeldsensor (112) zu bilden, und in der zweiten Position zueinander versetzt sind, um den magnetischen Kreis zu unterbrechen.

3. Positionserkennungsvorrichtung (102) gemäß einem der vorangegangenen Ansprüche, **gekennzeichnet durch** ein weiteres Koppelelement (400) zum magnetischen Koppeln des Magneten (108) mit dem Magnetfeldsensor (112), wobei das weitere Koppelelement (400) an und/oder in der Schublade (106) angeordnet ist, insbesondere wobei der Magnet (108) an dem weiteren Koppelelement (400) angeordnet ist.

4. Positionserkennungsvorrichtung (102) gemäß Anspruch 3, **dadurch gekennzeichnet, dass** das weitere Koppelelement (400) u-förmig mit einem ersten Schenkel (402) und einem zweiten Schenkel (404) ausgestaltet ist, wobei der Magnet (108) zwischen dem ersten Schenkel (402) und dem zweiten Schenkel (404) angeordnet ist.

5. Positionserkennungsvorrichtung (102) gemäß Anspruch 1 oder 2, **dadurch gekennzeichnet, dass** das Koppelelement (114) ein erstes Leitblech (300) und ein zweites Leitblech (302) umfasst, wobei der Magnetfeldsensor (112) zwischen dem ersten Leitblech (300) und dem zweiten Leitblech (302) angeordnet ist.

6. Positionserkennungsvorrichtung (102) gemäß Anspruch 4 und 5, **dadurch gekennzeichnet, dass** in der ersten Position der erste Schenkel (402) dem ersten Leitblech (300) und der Magnet (108) dem zweiten Leitblech (302) gegenüberliegt und/oder in der zweiten Position der Magnet (108) dem ersten Leitblech (300) und der zweite Schenkel (404) dem zweiten Leitblech (302) gegenüberliegt.

7. Positionserkennungsvorrichtung (102) gemäß Anspruch 5 oder 6, **dadurch gekennzeichnet, dass** das erste Leitblech (300) und/oder das zweite Leitblech (302) an zumindest einer Biegestelle (308, 310) umgebogen ist.

8. Positionserkennungsvorrichtung (102) gemäß einem der Ansprüche 5 bis 7, **dadurch gekennzeichnet, dass** das erste Leitblech (300) ein erstes U-Profil (316) und/oder das zweite Leitblech (302) ein zweites U-Profil (318) aufweist, wobei das erste U-Profil (316) durch einen Endabschnitt (312) des ersten Leitblechs (300) und/oder das zweite U-Profil (318) durch einen Endabschnitt (314) des zweiten Leitblechs (302) gebildet ist.

9. Positionserkennungsvorrichtung (102) gemäß Anspruch 8, **dadurch gekennzeichnet, dass** sich das erste U-Profil (316) und/oder das zweite U-Profil (318) in einer von der Einschubrichtung (306) abweichenden Richtung, insbesondere im Wesentlichen senkrecht zur Einschubrichtung (306), erstreckt, wobei der Magnet (108) zwischen dem ersten U-Profil (316) und dem zweiten U-Profil (318) durch Bewegen der Schublade (106) verschiebbar ist.

10. Positionserkennungsvorrichtung (102) gemäß einem der vorangegangenen Ansprüche, **dadurch gekennzeichnet, dass** der Magnet (108) als Dauermagnet, insbesondere als Stabmagnet, ausgeführt ist und/oder eine einen Nordpol (N) und einen Südpol (S) des Magneten (108) miteinander verbindende Längsachse (304) des Magneten (108) im Wesentlichen parallel oder senkrecht zur Einschubrichtung (306) ausgerichtet ist.

11. Positionserkennungsvorrichtung (102) gemäß einem der vorangegangenen Ansprüche, **gekennzeichnet durch** eine Erkennungseinrichtung (200) zum Erkennen der Position der Schublade (106) in Abhängigkeit von der durch den Magnetfeldsensor (112) erfassten Änderung des Magnetfelds.

12. Verfahren (500) zum Erkennen einer Position einer Schublade (106) in einem Einschubfach (104) eines Wäschepflegegeräts (100) unter Verwendung einer Positionserkennungsvorrichtung (102) gemäß einem der vorangegangenen Ansprüche, wobei das Verfahren (500) folgende Schritte umfasst:
Einlesen (510) eines Sensorsignals (215), das die von dem Magnetfeldsensor (112) erfasste Änderung des Magnetfelds repräsentiert; und
Erzeugen (520) eines die Position repräsentierenden Positionssignals (225) unter Verwendung des Sensorsignals (215).

13. Verfahren (600) zum Steuern eines Wäschepflegegeräts (100) mit einer Positionserkennungsvorrichtung (102) gemäß einem der Ansprüche 1 bis 11, wobei das Verfahren (600) folgende Schritte umfasst:
Einlesen (610) eines die Position der Schublade (106) repräsentierenden Positionssignals (225); und
Erzeugen (620) eines Steuersignals (255) zum Steuern des Wäschepflegegeräts (100) unter Verwendung des Positionssignals (225).

14. Steuergerät (230) mit einer Einleseeinheit (240) zum Einlesen eines Positionssignals (225) und einer Erzeugungseinheit (250) zum Erzeugen eines Steuersignals (255), die ausgebildet sind, um das Verfahren (600) gemäß Anspruch 13 auszuführen und/oder anzusteuern.

## Claims

1. Position-detecting device (102) for detecting a position of a drawer (106) in an insertion compartment (104) of a laundry care appliance (100), the position-detecting device (102) comprising the following features:
a magnet (108) arranged on and/or in the drawer (106) for generating a magnetic field; and
a magnetic field sensor (112) for detecting a change in the magnetic field when moving the drawer (106) in an insertion direction (306) between a first position and a second position in the insertion compartment (104), **characterised by** a coupling element (114) for magnetically coupling the magnet (108) to the magnetic field sensor (112), the coupling element (114) being arranged on and/or in the insertion compartment (104).

2. Position-detecting device (102) according to claim 1, **characterised in that** the coupling element (114) and the magnet (108) are opposite one another in the first position in order to form a magnetic circuit consisting of the magnet (108), the coupling element (114) and the magnetic field sensor (112), and are offset from one other in the second position in order to break the magnetic circuit.

3. Position-detecting device (102) according to either of the preceding claims, **characterised by** a further coupling element (400) for magnetically coupling the magnet (108) to the magnetic field sensor (112), the further coupling element (400) being arranged on and/or in the drawer (106), in particular the magnet (108) being arranged on the further coupling element (400).

4. Position-detecting device (102) according to claim 3, **characterised in that** the further coupling element (400) is U-shaped and has a first limb (402) and a second limb (404), the magnet (108) being arranged between the first limb (402) and the second limb (404).

5. Position-detecting device (102) according to either claim 1 or claim 2, **characterised in that** the coupling element (114) comprises a first baffle plate (300) and a second baffle plate (302), the magnetic field sensor (112) being arranged between the first baffle plate (300) and the second baffle plate (302).

6. Position-detecting device (102) according to claims 4 and 5, **characterised in that** the first limb (402) is opposite the first baffle plate (300) and the magnet (108) is opposite the second baffle plate (302) in the first position, and/or the magnet (108) is opposite the first baffle plate (300) and the second limb (404) is opposite the second baffle plate (302) in the second position.

7. Position-detecting device (102) according to either claim 5 or claim 6, **characterised in that** the first baffle plate (300) and/or the second baffle plate (302) is bent over at at least one bending point (308, 310).

8. Position-detecting device (102) according to any of claims 5 to 7, **characterised in that** the first baffle plate (300) has a first U-profile (316) and/or the second baffle plate (302) has a second U-profile (318), the first U-profile (316) being formed by an end portion (312) of the first baffle plate (300) and/or the second U-profile (318) being formed by an end portion (314) of the second baffle plate (302).

9. Position-detecting device (102) according to claim 8, **characterised in that** the first U-profile (316) and/or the second U-profile (318) extends in a direction different from the insertion direction (306), in particular substantially perpendicular to the insertion direction (306), the magnet (108) being displaceable between the first U-profile (316) and the second U-profile (318) by moving the drawer (106).

10. Position-detecting device (102) according to any of the preceding claims, **characterised in that** the magnet (108) is in the form of a permanent magnet, in particular a bar magnet, and/or a longitudinal axis (304) of the magnet (108) connecting a north pole (N) and a south pole (S) of the magnet (108) is substantially parallel or perpendicular to the insertion direction (306).

11. Position-detecting device (102) according to any of the preceding claims, **characterised by** a detection apparatus (200) for detecting the position of the drawer (106) in response to the change in the magnetic field detected by the magnetic field sensor (112).

12. Method (500) for detecting a position of a drawer (106) in an insertion compartment (104) of a laundry care appliance (100) using a position-detecting device (102) according to any of the preceding claims, wherein the method (500) comprises the following steps:
reading (510) a sensor signal (215) representing the change in the magnetic field detected by the magnetic field sensor (112); and
generating (520) a position signal (225) representing the position using the sensor signal (215).

13. Method (600) for controlling a laundry care appliance (100) comprising a position-detecting device (102) according to any of claims 1 to 11, wherein the method (600) comprises the following steps:
reading (610) a position signal (225) representing the position of the drawer (106); and
generating (620) a control signal (255) for controlling the laundry care appliance (100) using the position signal (225).

14. Control unit (230) comprising a reading unit (240) for reading a position signal (225) and a generating unit (250) for generating a control signal (255), which units are designed to carry out and/or trigger the method (600) according to claim 13.

## Revendications

1. Dispositif de détection de position (102) destiné à détecter une position d'un tiroir (106) dans un compartiment d'insertion (104) d'un lave-linge (100), le dispositif de détection de position (102) présentant les caractéristiques suivantes :
un aimant (108) disposé sur le tiroir (106) et/ou dans celui-ci, pour produire un champ magnétique ; et
un capteur de champ magnétique (112) destiné à détecter une variation du champ magnétique lorsque le tiroir (106) est déplacé dans un sens d'insertion (306) entre une première position et une seconde position dans le compartiment d'insertion (104), **caractérisé par** un élément de couplage (114) pour coupler magnétiquement l'aimant (108) au capteur de champ magnétique (112), l'élément de couplage (114) étant disposé sur le compartiment d'insertion (104) et/ou dans celui-ci.

2. Dispositif de détection de position (102) selon la revendication 1, **caractérisé en ce que** l'élément de couplage (114) et l'aimant (108) sont opposés dans la première position pour former un circuit magnétique à partir de l'aimant (108), de l'élément de couplage (114) et du capteur de champ magnétique (112), et sont décalés l'un de l'autre dans la seconde position pour interrompre le circuit magnétique.

3. Dispositif de détection de position (102) selon l'une des revendications précédentes, **caractérisé par** un élément de couplage supplémentaire (400) pour coupler magnétiquement l'aimant (108) au capteur de champ magnétique (112), l'élément de couplage supplémentaire (400) étant disposé sur le tiroir (106) et/ou dans celui-ci, l'aimant (108) étant en particulier disposé sur l'élément de couplage supplémentaire (400).

4. Dispositif de détection de position (102) selon la revendication 3, **caractérisé en ce que** l'élément de couplage supplémentaire (400) est réalisé en forme de U avec un premier bras (402) et un second bras (404), l'aimant (108) étant disposé entre le premier bras (402) et le second bras (404).

5. Dispositif de détection de position (102) selon la revendication 1 ou 2, **caractérisé en ce que** l'élément de couplage (114) comprend une première tôle de guidage (300) et une seconde tôle de guidage (302), le capteur de champ magnétique (112) étant disposé entre la première tôle de guidage (300) et la seconde tôle de guidage (302).

6. Dispositif de détection de position (102) selon la revendication 4 et 5, **caractérisé en ce que**, dans la première position, le premier bras (402) est opposé à la première tôle de guidage (300) et l'aimant (108) est opposé à la seconde tôle de guidage (302) et/ou dans la seconde position, l'aimant (108) est opposé à la première tôle de guidage (300) et le second bras (404) est opposé à la seconde tôle de guidage (302).

7. Dispositif de détection de position (102) selon la revendication 5 ou 6, **caractérisé en ce que** la première tôle de guidage (300) et/ou la seconde tôle de guidage (302) est courbée au niveau d'au moins un point de flexion (308, 310).

8. Dispositif de détection de position (102) selon l'une des revendications 5 à 7, **caractérisé en ce que** la première tôle de guidage (300) présente un premier profilé en U (316) et/ou la seconde tôle de guidage (302) présente un second profilé en U (318), le premier profilé en U (316) étant formé par une partie d'extrémité (312) de la première tôle de guidage (300) et/ou le second profilé en U (318) étant formé par une partie d'extrémité (314) de la seconde tôle de guidage (302).

9. Dispositif de détection de position (102) selon la revendication 8, **caractérisé en ce que** le premier profilé en U (316) et/ou le second profilé en U (318) s'étend dans un sens s'écartant du sens d'insertion (306), en particulier sensiblement perpendiculaire au sens d'insertion (306), l'aimant (108) pouvant être déplacé entre le premier profilé en U (316) et le second profilé en U (318) par le déplacement du tiroir (106).

10. Dispositif de détection de position (102) selon l'une des revendications précédentes, **caractérisé en ce que** l'aimant (108) est réalisé sous la forme d'un aimant permanent, en particulier d'un barreau aimanté, et/ou **en ce qu'**un axe longitudinal (304) de l'aimant (108) reliant un pôle nord (N) et un pôle sud (S) de l'aimant (108) est orienté sensiblement parallèlement ou perpendiculairement au sens d'insertion (306).

11. Dispositif de détection de position (102) selon l'une des revendications précédentes, **caractérisé par** un dispositif de détection (200) destiné à détecter la position du tiroir (106) en fonction de la variation du champ magnétique détectée par le capteur de champ magnétique (112).

12. Procédé (500) de détection d'une position d'un tiroir (106) dans un compartiment d'insertion (104) d'un lave-linge (100) à l'aide d'un dispositif de détection de position (102) selon l'une des revendications précédentes, le procédé (500) comprenant les étapes :
de lecture (510) d'un signal de capteur (215) représentant la variation du champ magnétique détectée par le capteur de champ magnétique (112) ; et
de production (520) d'un signal de position (225) représentant la position en utilisant le signal de capteur (215).

13. Procédé (600) de commande d'un lave-linge (100) comportant un dispositif de détection de position (102) selon l'une des revendications 1 à 11, le procédé (600) comprenant les étapes :
de lecture (610) d'un signal de position (225) représentant la position du tiroir (106) ; et
de production (620) d'un signal de commande (255) pour commander le lave-linge (100) en utilisant le signal de position (225).

14. Appareil de commande (230) comportant une unité de lecture (240) destinée à lire un signal de position (225) et une unité de production (250) destinée à produire un signal de commande (255), lesquels sont conçus pour exécuter le procédé (600) selon la revendication 13 et/ou pour commander celui-ci.
